# EUROPÄISCHE PATENTSCHRIFT

(11) **EP 1 764 630 B1**
(45) Veröffentlichungstag und Bekanntmachung des Hinweises auf die Patenterteilung: **11.03.2009**
(21) Anmeldenummer: 06120074.7
(22) Anmeldetag: 04.09.2006
(51) Int. Cl.: G01S 15/93

(54) **Verfahren zur Parklückenbestimmung für Kraftfahrzeuge**
Method of determining the size of a parking place
Procédé de mesure de creneaux de stationnement d'un vehicule

(30) Priorität: 15.09.2005 DE 102005044050
(43) Veröffentlichungstag der Anmeldung: 21.03.2007
(73) Patentinhaber: Hella KGaA Hueck & Co., 59552 Lippstadt (DE)
(72) Erfinder: Ottenhues, Thomas, 48477 Hörstel (DE)

(56) Entgegenhaltungen:
- EP-A- 1 643 271
- WO-A-97/47991
- WO-A-02/091019
- WO-A-20/07014595
- DE-A- 10 323 639

## Beschreibung

Die Erfindung bezieht sich auf ein Verfahren zur Parklückenbestimmung für Kraftfahrzeuge mittels eines Puls-/Echoverfahrens unter Verwendung eines eine Sende-/Empfangseinrichtung aufweisenden Ultraschallsensors, wobei die Sende-Empfangseinrichtung zur Messung der Entfernung von seitlich vom Kraftfahrzeug befindlichen Objekten ausgerichtet ist. Ein derartiges Verfahren ist beispielsweise aus der DE 103 23 639 A1 bekannt. Dabei wird mittels des Ultraschallsensors bei einer langsamen Vorbeifahrt an zwei beabstandet parkenden Fahrzeugen die Länge und die Breite der Parklücke bestimmt. Dabei wird dem Fahrer angezeigt, ob und gegebenenfalls mit wie viel Platz sein Fahrzeug in die vermessene Parklücke passt. Diese Information kann auch an ein Parkassistenzsystem, welches das Fahrzeug voll oder semiautomatisch in die vermessene Parklücke manövriert, übergeben werden.

Dabei ist es nicht nur interessant, zweidimensionale Informationen über die Begrenzungen der Parklücke bezogen auf die Fahrbahnebene zu erhalten, vielmehr ist auch eine Information über die Höhe von Objekten von Bedeutung. Insbesondere ist es interessant, festzustellen, ob es sich bei einem Objekt um ein flaches Hindernis (z.B. eine Bordsteinkante) handelt, das überfahren werden kann, oder um ein hohes Hindernis (z.B. eine Mauer oder Wand).

Aufgabe der Erfindung ist es daher, ein Verfahren zur Parklückenbestimmung zu schaffen, bei dem nicht nur die Entfernung von seitlich vom Kraftfahrzeug befindlichen Objekten bestimmt werden kann, sondern auch eine Information über die Höhe dieser Objekt ermittelt werden kann.

Diese Aufgabe wird erfindungsgemäß dadurch gelöst, dass - im Unterschied zum Stand der Technik, wo nur das erste Echosignal, das von einem Objekt reflektiert wird, empfangen und ausgewertet wird - auch mehrere Echosignale als Antwort auf einen Ultraschallsendepuls detektiert werden können, wobei anhand der Detektion von zwei Echosignalen in einem vorbestimmten zeitlichen Maximalabstand (=Doppelechoauswertung) eine Bewertung hinsichtlich der Höhe eines Objektes erfolgt. Dabei macht die Erfindung sich den Umstand zunutze, dass Objekte, die eine gewisse Mindesthöhe gegenüber dem Boden (Fahrbahnebene) aufweisen, zwei Echosignale erzeugen, nämlich ein erstes Echosignal aufgrund der direkten Reflexion an dem Objekt und ein zweites Echosignal aufgrund einer weiteren Reflexion der vom Objekt gestreuten Schallwelle am Boden. Mit anderen Worten ist die Existenz eines Doppelechosignals, bei dem die beiden Echosignale in einem vorbestimmten eng definierten Abstand (Zeitfenster) liegen, charakteristisch für ein Objekt mit einer gewissen Mindesthöhe. Objekte, die diese Mindesthöhe unterschreiten, wie zum Beispiel eine Bordsteinkante, senden als Antwort auf einen Ultraschallsendepuls nur ein einziges Echosignal aus. Wenn im folgenden von einem Doppelecho die Rede ist, so sind damit immer zwei Echosignale gemeint, deren zeitlicher Abstand zueinander innerhalb eines vorbestimmten Maximalabstandes liegt.

Aus der nachveröffentlichten WO 2007/014595 A1 ist ein Verfahren zur Ermittlung der Tiefenbegrenzung einer Parklücke mittels eines Ultraschallsensors bekannt, bei dem die Sende-Empfangseinrichtung des Ultraschallsensors zur Messung der Entfernung von seitlich vom Kraftfahrzeug befindlichen Objekten ausgerichtet ist. Anhand der Detektion von zwei Echosignalen als Doppelecho, deren zeitlicher Abstand zueinander kleiner als ein vorbestimmter Maximalabstand ist, erfolgt eine Bewertung hinsichtlich der Höhe eines Objektes. Entsprechend hohe Objekte werden als eine Tiefenbegrenzung der Parklücke identifiziert.

Anhand der beigefügten Zeichnungen soll die Erfindung nachfolgend näher erläutert werden. Es zeigt:
- Figur 1: eine Draufsicht aus der Vogelperspektive auf eine zwischen zwei parkenden Fahrzeugen gebildete Parklücke,
- Figur 2: eine schematische Darstellung der Rückstreuung/Reflexion eines Ultraschallsendepulses an einer Bordsteinkante und an einer dahinterliegenden Wand,
- Figur 3: den zeitlichen Verlauf der detektierten Echosignale für die in Figur 2 dargestellte Situation.

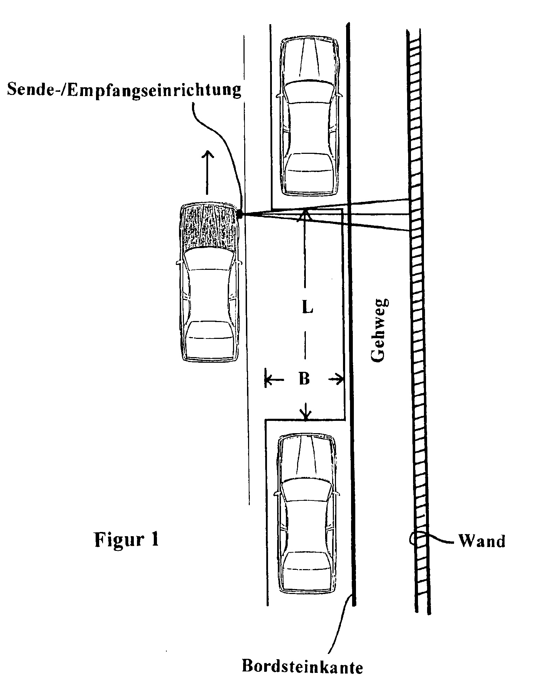

Figur 1 zeigt eine Draufsicht aus der Vogelperspektive auf eine zwischen zwei parkenden Fahrzeugen gebildete Parklücke. Das Fahrzeug, das eingeparkt werden soll, tastet nun mit seinem seitlich angeordneten Ultraschallsensor während einer langsamen Vorbeifahrt (< 30km/h) an den beabstandet parkenden Fahrzeugen die Länge (L) und die Breite (B) der Parklücke ab. Dabei ist die Sende-/Empfangseinrichtung des Ultraschallsensors zur Messung der Entfernung von seitlich vom Kraftfahrzeug befindlichen Objekten ausgerichtet ist. Die Sende-/Empfangseinrichtung des Ultraschallsensors kann beispielsweise seitlich im Stoßfänger, im Außenspiegel oder in einer Seitenmarkierungsleuchte integriert sein. Die typische Einbauhöhe für die Sende-/Empfangseinrichtung liegt zwischen 40 cm und 110 cm. In der in Figur 1 dargestellten Situation parken die beiden zwischen sich die Parklücke bildenden Fahrzeuge benachbart zu einer Bordsteinkante, an die sich ein Gehweg anschließt, der von einer im Vergleich zur Bordsteinkante hohen Wand begrenzt wird.

Dabei ist die Sende-/Empfangseinrichtung des Ultraschallsensors so angeordnet und ausgerichtet und weist eine derartige Abstrahl- und Empfangscharakteristik auf, dass nicht nur relativ hohe Objekte, wie andere Fahrzeuge und Wände/Mauern, detektiert und deren Entfernung zum seitlich vorbeifahrenden Fahrzeug bestimmt werden kann. Vielmehr können auch relative flache Objekte, wie zum Beispiel eine Bordsteinkante, detektiert und dessen Entfernung zum vorbeifahrenden Fahrzeug bestimmt werden. Wäre nun - wie im Stand der Technik - eine Aussage über die Höhe dieser Objekte nicht möglich, sondern würde nur die Entfernung zum vorbeifahrenden Fahrzeug bestimmt, so würde die relativ flache Bordsteinkante - ebenso wie ein Fahrzeug oder eine Wand - als nicht überfahrbares Hindernis betrachtet werden. Im Fall einer Parklücke, die durch zwei teilweise auf der Bordsteinkante parkende Fahrzeuge begrenzt wird, würde die Bordsteinkante also als nicht überfahrbares Hindernis detektiert, was zur Folge hätte, dass die Breite (B) Parklücke irrtümlicherweise als zu gering bestimmt werden würde.

Würde man andererseits die Sende-/Empfangseinrichtung des Ultraschallsensors so anordnen und ausrichten und mit einer derartigen Abstrahl- und Empfangscharakteristik versehen, dass eine relativ flache Bordsteinkante überhaupt nicht erkannt werden würde, hätte man das Problem der möglicherweise zu klein bestimmten Parklückenbreite nicht. Dies würde jedoch in nachteiliger Weise wiederum bedeuten, dass bei einem Einparkmanöver in Unkenntnis der Bordsteinkante auf das Überfahren derselben nicht vorausschauend reagiert werden kann. Denn auch dann, wenn dem Fahrer angezeigt wird, das sein Fahrzeug in die vermessene Parklücke passt, würde er in Kenntnis der Information, dass er zum Einparken eine Bordsteinkante überfahren muß, diese Parklücke möglicherweise nicht nutzen. In Verbindung mit einem Parkassistenzsystem, welches das Fahrzeug voll oder semiautomatisch in die vermessene Parklücke manövriert, wäre die Information, dass beim Einparken eine Bordsteinkante überfahren werden muß, ebenfalls von Vorteil, da dann die Manövrierstrategie auf das nicht unkritische Überfahren der Bordsteinkante angepasst werden kann.

Erfindungsgemäß ist es nun möglich, auch relativ flache Objekte (z.B. Bordsteinkanten), die nur eine geringe Höhe gegenüber der Fahrbahnebene des einzuparkenden Fahrzeugs aufweisen, zu detektieren und nicht nur deren seitliche Entfernung zum einzuparkenden Fahrzeug zu bestimmen, sondern auch eine Aussage über die Höhe dieser Objekte zu machen. Dabei ist nicht so sehr die absolute Höhe der Objekte entscheidend, sondern vielmehr die Information darüber, ob ein Objekt, das in einer gewissen Entfernung detektiert wurde, eine vorbestimmte Mindesthöhe (z.B. 20cm) überschreitet oder unterschreitet.

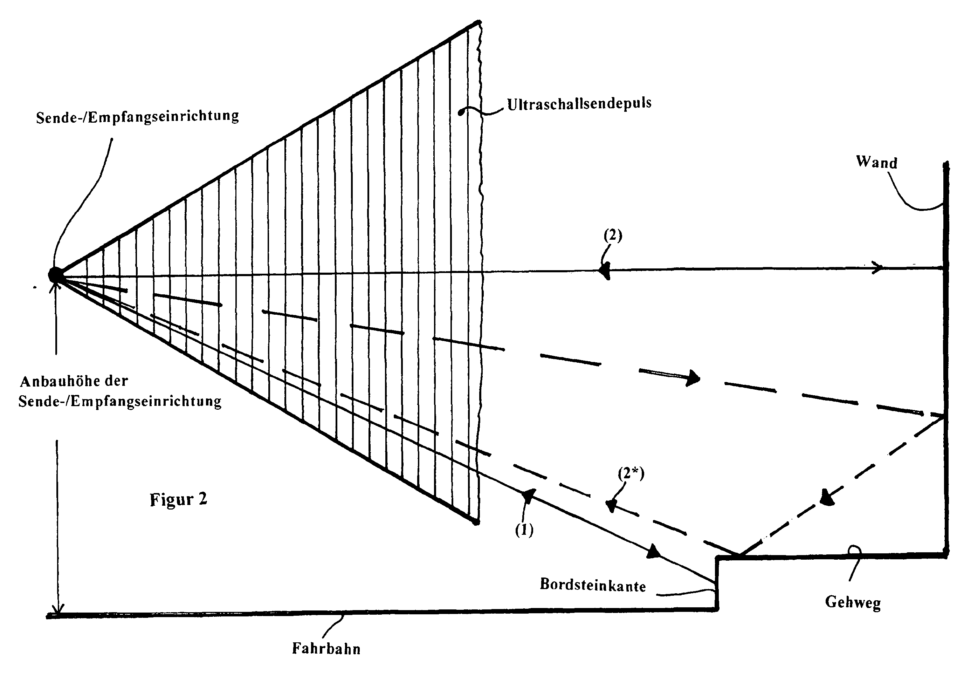

Figur 2 zeigt schematisch die Rückstreuung/Reflexion eines Ultraschallsendepulses an einer Bordsteinkante und an einer dahinterliegenden, einen Gehweg begrenzenden Wand. Die Sende-/Empfangseinrichtung des Ultraschallsensors befindet sich in einer Anbauhöhe von ca. 40 bis 70 cm bezogen auf die Fahrbahn und ist zur Erfassung von seitlich vom Fahrzeug befindlichen Objekten ausgerichtet. Die Sende-/Empfangscharakteristik weist in vertikaler Richtung einen Öffnungswinkel von ca. ± 30° jeweils bezogen auf die horizontal verlaufende Zentralrichtung der Sende-/Empfangseinrichtung auf. Abweichend von dieser Darstellung kann die Zentralrichtung auch leicht nach unten geneigt sein.

Wie zu erkennen ist, wird von der Borsteinkante nur ein einziges Echosignal (1) erzeugt, dass zum Zeitpunkte T1 von der Sende-Empfangseinrichtung detektiert wird. Im Unterschied hierzu werden von der relativ hohen Wand, welche die Mindesthöhe bezogen auf die Fahrbahn überschreitet, zwei Echosignale (2,2*) erzeugt, die zu den Zeitpunkten T2 und T3 von der Sende-/Empfangseinrichtung detektiert werden, nämlich ein Echosignal (2), das unmittelbar von der Wand zurück zur Sende-/Empfangseinrichtung reflektiert wird und ein Echosignal (2*), das erst über eine weitere Reflexion der von der Wand gestreuten Schallwelle am Boden/Gehweg zurück zur Sende-/Empfangseinrichtung reflektiert wird. Dabei ist der Abstand der beiden Zeitpunkte T2 und der T3 voneinander kleiner als der Maximalabstand ΔT.

Versuche haben gezeigt, dass ein zeitlicher Maximalabstand, in dem bei einem Ultraschallsensor zwei Echosignale liegen müssen, um zuverlässig als Doppelecho für die Höhenbeurteilung erkannt zu werden, vorzugsweise kleiner als 2 Millisekunden ist. In diesem Fall kann zuverlässig sicher gestellt werden, dass es sich nicht um zwei Echosignale von Objekten in unterschiedlicher Entfernung oder um sonstige Artefakte handelt.

Darüber hinaus hat es sich bei Versuchen herausgestellt, dass es sinnvoll ist, die Detektion von zwei Echosignalen als Doppelecho nur dann zur Bewertung der Höhe eines Objektes heranzuziehen, wenn das Verhältnis der Signalstärken der beiden Echosignale sich um nicht mehr als ein vorbestimmter Faktor unterscheidet.

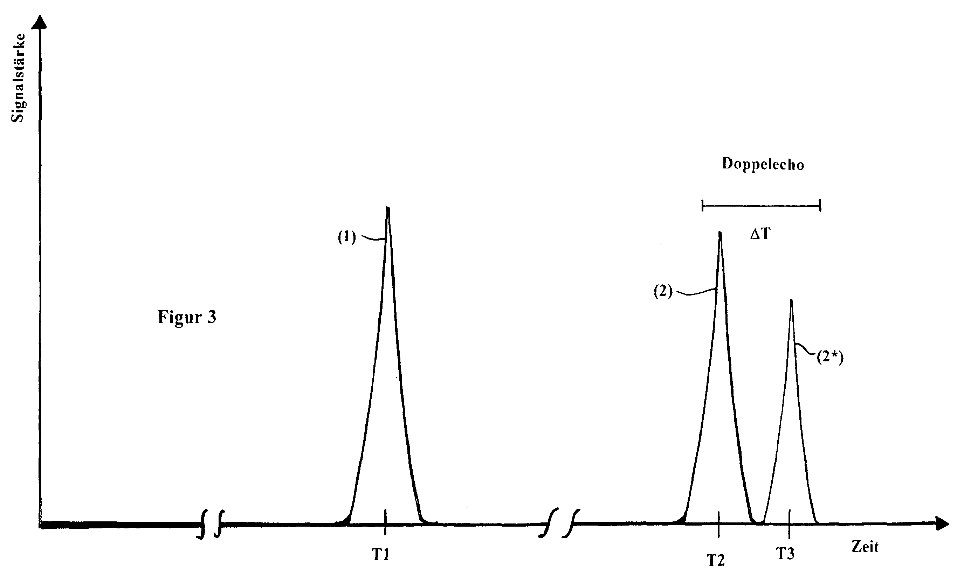

Wie in Figur 3 zu erkennen ist, wird zuerst das Echo der Bordsteinkante als Einzelechosignal (1) detektiert, da die Entfernung zwischen der Bordsteinkante und der Sende-/Empfangseinrichtung am geringsten und die Laufzeit des Echos damit am kleinsten ist. Dann werden nacheinander in kurzem zeitlichen Abstand (< ΔT) die beiden Echos (2,2*) der Wand als Doppelecho detektiert.

## Patentansprüche (Patentansprüche für folgende(n) Vertragsstaat(en): AT, BE, CH, DK, GB, GR, LI, LU, MC, NL, SE)

1. Verfahren zur Parklückenbestimmung für Kraftfahrzeuge mittels eines Puls-/Echoverfahrens unter Verwendung eines Ultraschallsensors mit einer Ultraschall-Sende-. /Empfangseiirichtung, wobei die Sende-Empfangseinrichtung zur Messung der Entfernung von seitlich vom Kraftfahrzeug befindlichen Objekten ausgerichtet ist,
**dadurch gekennzeichnet, dass**
anhand der Detektion von zwei Echosignalen (2,2*) als Doppelecho, deren zeitlicher Abstand zueinander kleiner als ein vorbestimmter Maximalabstand ist, eine Bewertung hinsichtlich der Höhe eines Objektes erfolgt, wobei bei Detektion eines Doppelechos festgestellt wird, dass das Objekt zumindest eine Mindesthöhe aufweist und beim Fehlen eines Doppelechos festgestellt wird, dass die Höhe des Objekts die Mindesthöhe unterschreitet.

2. Verfahren nach Anspruch 1,
**dadurch gekennzeichnet, dass**
die Detektion von zwei Echosignalen nur dann als Doppelecho zur Bewertung der Höhe eines Objektes herangezogen wird, wenn die beiden Echosignale in einem vorbestimmten zeitlichen Maximalabstand von kleiner als 2 Millisekunden detektiert wurden.

3. Verfahren nach einem der vorstehenden Ansprüche,
**dadurch gekennzeichnet, dass**
die Detektion von zwei Echosignalen als Doppelecho nur dann zur Bewertung der Höhe eines Objektes herangezogen wird, wenn das Verhältnis der Signalstärken der beiden Echosignale sich um nicht mehr als ein vorbestimmter Faktor unterscheidet.

## Patentansprüche (Patentansprüche für folgende(n) Vertragsstaat(en): DE, FR, IT, ES)

1. Verfahren zur Parklückenbestimmung für Kraftfahrzeuge mittels eines Puls-/Echoverfahrens unter Verwendung eines Ultraschallsensors mit einer Ultraschall-Sende-/Empfangseinrichtung, wobei die Sende-Empfangseinrichtung zur Messung der Entfernung von seitlich vom Kraftfahrzeug befindlichen Objekten ausgerichtet ist und dass anhand der Detektion von zwei Echosignalen (2,2*) als Doppelecho, deren zeitlicher Abstand zueinander kleiner als ein vorbestimmter Maximalabstand ist, eine Bewertung hinsichtlich der Höhe eines Objektes erfolgt, wobei bei Detektion eines Doppelechos festgestellt wird, dass das Objekt zumindest eine Mindesthöhe aufweist und beim Fehlen eines Doppelechos festgestellt wird, dass die Höhe des Objekts die Mindesthöhe unterschreitet, und dass die Detektion von zwei Echosignalen nur dann als Doppelecho zur Bewertung der Höhe eines Objektes herangezogen wird, wenn die beiden Echosignale in einem vorbestimmten zeitlichen Maximalabstand von kleiner als 2 Millisekunden detektiert wurden und wenn das Verhältnis der Signalstärken der beiden Echosignale sich um nicht mehr als ein vorbestimmter Faktor unterscheidet.

## Claims (Claims for the following Contracting State(s): AT, BE, CH, DK, GB, GR, LI, LU, MC, NL, SE)

1. Method of analysing parking spaces for motor vehicles by means of a pulse/echo technique based on an ultrasound sensor comprising an ultrasound transmitter and receiver unit, wherein the transmitter and receiver unit is designed to measure the distance of objects located at the side of the motor vehicle,
**characterized in that**
a dual echo, if detected as two echo signals (2,2*) laterally spaced at a shorter than a specified maximum distance, is taken to assess the height of an object such that, if the dual echo is detected, the height of the object is at least a set minimum and, if no dual echo is detected, the height of the object is below said set minimum.

2. Method of claim 1,
**characterized in that**
the detection of two echo signals will be regarded as a dual echo for determining the height of an object only if the two echo signals are detected within a set maximum time of less than 2 milliseconds.

3. Method of one of the above claims,
**characterized in that**
the detection of two echo signals as a dual echo will be taken to determine the height of an object only if the ratio of signal strengths of the two echo signals does not differ by more than a set factor.

## Claims (Claims for the following Contracting State(s): DE, FR, IT, ES)

1. Method of analysing parking spaces for motor vehicles by means of a pulse/echo technique based on an ultrasound sensor comprising an ultrasound transmitter and receiver unit, wherein the transmitter and receiver unit is designed to measure the distance of objects located at the side of the motor vehicle, **characterized in that** a dual echo, if detected as two echo signals (2,2*) laterally spaced at a shorter than a specified maximum distance, is taken to assess the height of an object such that, if the dual echo is detected, the height of the object is at least a set minimum and, if no dual echo is detected, the height of the object is below said set minimum, and further **characterized in that** the detection of two echo signals will be regarded as a dual echo for determining the height of an object only if the two echo signals are detected within a set maximum time of less than 2 milliseconds and if the ratio of signal strengths of the two echo signals does not differ by more than a set factor.

## Revendications (Revendications pour l'(les) Etat(s) contractant(s) suivant(s): AT, BE, CH, DK, GB, GR, LI, LU, MC, NL, SE)

1. Procédé de détermination de la place de stationnement pour véhicules à l'aide d'un procédé à impulsions/écho sous utilisation d'un capteur à ultrasons avec un dispositif émetteur/récepteur à ultrasons, le dispositif émetteur/récepteur étant orienté pour la mesure de la distance d'objets se trouvant sur le côté du véhicule,
**caractérisé en ce que**,
à l'appui de la détection de deux signaux d'écho (2, 2x) comme double écho, dont l'espacement dans le temps est inférieur à un espacement maximal prédéfini, une évaluation de la hauteur d'un objet a lieu, avec constatation que, lors de la détection d'un double écho, l'objet présente au moins une hauteur minimale et, en cas d'absence d'un double écho, que la hauteur de l'objet est inférieure à la hauteur minimale.

2. Procédé selon la revendication 1,
**caractérisé en ce que**
la détection de deux signaux d'écho en tant que double écho ne sert à évaluer la hauteur d'un objet que lorsque les deux signaux d'écho ont été détectés à un espacement maximal dans le temps prédéfini inférieur à 2 millisecondes.

3. Procédé selon l'une des revendications ci-avant,
**caractérisé en ce que**
la détection de deux signaux d'écho en tant que double écho ne sert à évaluer la hauteur d'un objet que lorsque le rapport des intensités des deux signaux d'écho ne se différencie pas de plus d'un facteur prédéfini.

## Revendications (Revendications pour l'(les) Etat(s) contractant(s) suivant(s): DE, FR, IT, ES)

1. Procédé de détermination de la place de stationnement pour véhicules à l'aide d'un procédé à impulsions/écho sous utilisation d'un capteur à ultrasons avec un dispositif émetteur/récepteur à ultrasons, le dispositif émetteur/récepteur étant orienté pour la mesure de la distance d'objets se trouvant sur le côté du véhicule et que, à l'appui de la détection de deux signaux d'écho (2, 2x) comme double écho, dont l'espacement dans le temps est inférieur à un espacement maximal prédéfini, une évaluation de la hauteur d'un objet a lieu, avec constatation que, lors de la détection d'un double écho, l'objet présente au moins une hauteur minimale et, en cas d'absence d'un double écho, que la hauteur de l'objet est inférieure à la hauteur minimale et que la détection de deux signaux d'écho en tant que double écho ne sert à évaluer la hauteur d'un objet que lorsque les deux signaux d'écho ont été détectés à un espacement maximal dans le temps prédéfini inférieur à 2 millisecondes et que le rapport des intensités des deux signaux d'écho ne se différencie pas de plus d'un facteur prédéfini.
